# EUROPEAN PATENT APPLICATION

(11) **EP 4 575 719 A1**
(43) Date of publication of application: **25.06.2025**
(21) Application number: 24212666.2
(22) Date of filing: 13.11.2024
(51) Int. Cl.: G06F 1/26, G06F 1/28, G06F 1/30, H02M 3/158, H02M 3/156

(54) **VOLTAGE REGULATOR**

(30) Priority: 22.12.2023 US 202318394934
(71) Applicant: INTEL Corporation, Santa Clara, CA 95054 (US)
(72) Inventor: LIVINGSTON, Kelly, Beaverton, OR, 97003 (US); SCHAEF, Christopher, San Diego, CA, 92127 (US); LYAKHOV, Alexander, Portland, OR, 97229 (US); LUKIYANCHENKO, Dmitry, Beaverton, OR, 97007 (US); GEPPERT, Maximilian, Beaverton, Oregon, 97003 (US); RAYESS, Rachid, Hudson, MA, 01749 (US)
(74) Representative: Viering, Jentschura & Partner mbB Patent- und Rechtsanwälte

(57) **Abstract**

Embodiments herein relate to a voltage regulator (VR) which includes a main current source (MCS), a parallel current source (PCS) which is activated when a voltage droop is detected, and a finite state machine (FSM) to manage a recovery from the voltage droop. The FSM can have a Droop state in which a droop is detected in the output voltage of the VR and the PCS provides an output current to an output node of the VR, a PCS ramp down state in which the output current of the PCS ramps down while the MCS has a boosted set point, and a voltage identifier (VID) boost ramp down state in which the set point of the MCS ramps down from the boosted set point.

## Description

### BACKGROUND

Computing devices often rely on voltage regulators, also referred to as voltage converters, to obtain power. For example, direct current (DC)-to-DC voltage regulators can convert a power supply at one DC voltage to another, typically lower DC voltage. A voltage regulator can convert the main supply voltage of a computing device, such as 12-48 V, down to lower voltages, such as about 1-2 V. The lower voltages can be used by various components in the computing device, such as a Universal Serial Bus (USB) interface, memory such as dynamic random access memory (DRAM), and processing resources such as a central processing unit (CPU). However, various challenges are encountered in operating voltage regulators in an efficient, cost-effective and stable manner.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
FIG. 1 depicts example plots of current and output voltage versus time for a buck voltage regulator (VR) under a low dropout condition, in accordance with various embodiments.
FIG. 2 depicts an example VR 200 including a parallel current source (PCS) 210 and a Finite State Machine (FSM) 220 for droop mitigation, in accordance with various embodiments.
FIG. 3A depicts an example state diagram 300 of the FSM 220 of FIG. 2, in accordance with various embodiments.
FIG. 3B depicts an example table of state and FSM action for the state diagram 300 of FIG. 3A, in accordance with various embodiments.
FIG. 4 depicts an example circuit 400 which implements the FSM 220 of FIG. 2, in accordance with various embodiments.
FIG. 5 depicts example plots of PCS code, Video Identifier boost signal (VIDboost) and sensed voltage (Vsense) versus time in an example progression of the FSM 220 of FIG. 2, in accordance with various embodiments.
FIG. 6 depicts plots of output voltage versus time in an example response of the FSM 220 of FIG. 2 when the VR 200 has a relatively low dI/dt event occur, in accordance with various embodiments.
FIG. 7 depicts plots of output voltage versus time in an example response of the FSM 220 of FIG. 2 when the VR 200 has a relatively high dI/dt event occur, in accordance with various embodiments.
FIG. 8 depicts a comparative example implementation of the high-pass filter 270 of FIG. 2 as alternating current (AC)-coupled filter 800 with a fixed comparison voltage Vcomp, in accordance with various embodiments.
FIG. 9 depicts plots of voltage versus time in an irrecoverable oscillation condition which can occur with the filter 800 of FIG. 8.
FIG. 10 depicts another example implementation of the high-pass filter 270 of FIG. 2 as an AC-coupled filter 1000 with a programmable Vcomp to avoid the irrecoverable oscillation of FIG. 9, in accordance with various embodiments.
FIG. 11A depicts plots of voltage versus time for a high-pass (HP) common mode with boosting (plots 1100a and 1100b) and a HP filter digital-to-analog control (DAC) voltage (plots 1101a and 1101b), in accordance with various embodiments.
FIG. 11B depicts plots of voltage versus time for a HP common mode without boosting (plots 1110a and 1110b) and a HP filter DAC voltage (plots 1111a and 1111b), in accordance with various embodiments.
FIG. 11C depicts plots of voltage versus time of an effective trip point relative to a VR set point with no boosting (plot 1120) and with boosting (plot 1121), in accordance with various embodiments.
FIG. 12 depicts plots of voltage versus time of an output voltage, a high-pass coupled voltage and an effective threshold, in accordance with various embodiments.
FIG. 13 depicts a plot of output voltage versus time, showing example tuning parameters, in accordance with various embodiments.
FIG. 14 depicts a plot of output voltage versus time, showing an example synchronization time, in accordance with various embodiments.
FIG. 15 depicts equations for calculating a slew rate of an FSM, in accordance with various embodiments.
FIG. 16 depicts equations for modeling decoupling and FSM bandwidth, in accordance with various embodiments.
FIG. 17 illustrates an example of components that may be present in a computing system 1750 for implementing the techniques (e.g., operations, processes, methods, and methodologies) described herein.

### DETAILED DESCRIPTION

As mentioned at the outset, various challenges are presented in operating voltage regulators in an efficient, cost-effective and stable manner.

Oftentimes a tradeoff must be made between voltage converter efficiency optimizations and minimum voltage (Vmin) impacts due to transient droops while ensuring a stable regulation loop. Some approaches focus on high inductance magnetic package inductors to reduce the switching losses incurred from on-die switching parasitics and inductor skin losses as well as improve voltage ripple, but these improvements must be traded-off with the decrease in transient performance, many times requiring additional decoupling at increased expense.

Another approach involves a device clamp and on-die inductor design on fully integrated voltage regulator (FIVR) technologies. A FIVR refers to a voltage regulator integrated on-package or on-die. To mitigate droop, a FIVR may add a second inductor with much lower transient inductance in parallel to increase the slew rate in conditions during large load transients. It relies on energy to be stored in inductive components to lower regulation bandwidth, reduce inrush current, but still having reasonably low impedance to mitigate the droop. This approach can use a hysteretic controller to provide a very low impedance inductive buck regulator.

However, the use of inductance in combination with devices in a linear region is not well controlled across many different operating conditions, leading to either high frequency limit cycle oscillations (LCOs) at high dropout or insufficient mitigation at low dropout. Additionally, the inductors are built with top metal layers within the die which must be taken from the main power grid, increasing propagation delay across the domain and hurting decoupling bandwidth. Lastly, the approach does not control the device strength and this, along with previous issues, leads to considerable behavioral variation across conditions. The approach can also enter into LCOs with no deterministic way to exit the oscillations. This can lead to Vmin degradation as well as worsened power delivery efficiency and generation of severe supply line noise that affects other sensitive domains that shared that supply line.

The solutions provided herein address the above and other disadvantages. In one aspect, the solution utilizes devices biased in the saturation region. The solution uses a parallel current source (PCS) to provide a known amount of current across all operating conditions. The PCS is a secondary current source which augments the current provided by a primary or main current source (MCS) when there is a droop condition in the voltage output of the voltage generator.

The PCS powertrain can be used in conjunction with filtered comparators and a finite state machine (FSM) referred to as a Droop Iso-Vmin Protection (DIP) FSM. The FSM sequences and communicates loop interactions with a buck converter's feedback mechanism, e.g., a type 3 feedback mechanism, to mitigate droop while using the least amount of direct current possible and maintain loop stability. This can be accomplished by using power management information such as the number of phases and the Voltage Identification (VID), fused electrical information relating to the operating conditions, and digitally calculating the optimum modulation of the PCS power train and detection filters to mitigate droop with a minimal amount of LCOs. The VID is a digital code that the central processing unit (CPU) uses to request a specific voltage from a voltage converter. Examples of fused electrical information include inductor, metal-insulator-metal (MIM) capacitor, and Linear Voltage Regulator (LVR) power train configurations.

The solutions provide a number of advantages, including reducing overall voltage droop for worse-case or virus scenarios, resulting in an improved Vmin for all average case scenarios. A power virus can refer to a scenario where a chip or a circuit experiences an unexpected and abnormal increase in power consumption. This increased power demand can strain the power delivery network, potentially causing voltage droops, increased temperature, and other adverse effects. The solutions demonstrated Vmin benefits at different Voltage-to-Frequency (V/F) points of a voltage generator.

Four primary benefits can be provided, which can be varied for a particular product's performance and cost requirements. A first benefit is lower overall output impedance which leads to lower overall load circuit power consumption for the same performance (i.e., reduced Vmin). A second benefit is lower upstream decoupling bill of material (BOM) cost or, stated differently, a lower Vccin tolerance for the same output droop, where Vccin is the input voltage to the VR. A third benefit is more efficient output decoupling utilization. Additional decoupling in an inductive buck regulator usually provides a droop benefit that scales with the square root of the decoupling increase whereas this solution can provide a linear benefit while still maintaining a stable loop so long as the decoupling increase is at the required bandwidth. A fourth benefit is that the above-mentioned Vmin reduction can provide cost benefits to upstream components in the power delivery network since a Vmin reduction correspondingly reduces ICCMax (maximum current consumption) for the same performance. These four benefits can be tradeoff with each other to improve performance at ISO-power, increase efficiency at ISO-performance, or reduce BOM at ISO-Performance/Power according to the priorities of the product designer.

These and other features will be further apparent in view of the following discussion.

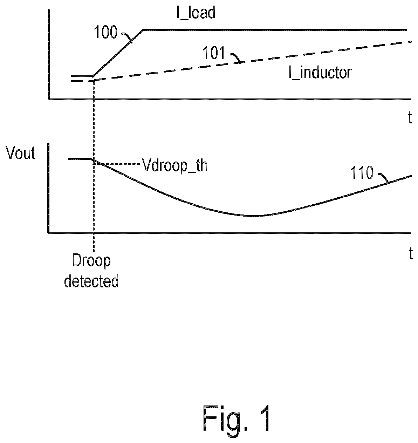

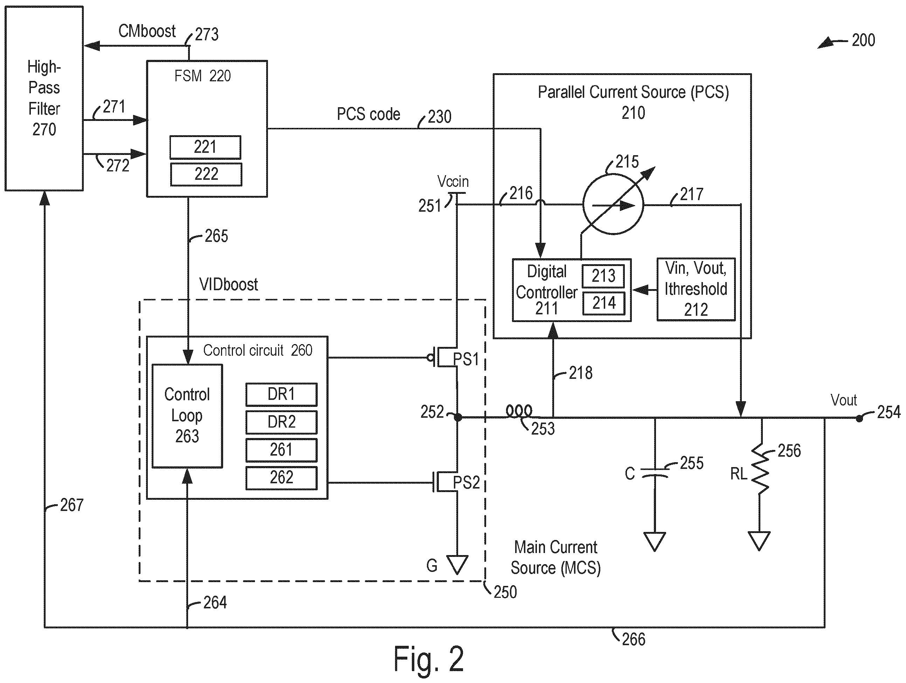

FIG. 1 depicts example plots of current and output voltage versus time for a buck VR under a low dropout condition, in accordance with various embodiments. A buck VR is direct current (DC)-to-DC converter that reduces an input voltage from a higher level to a lower level to provide an output voltage and current to a load. A buck VR switches the input voltage on and off at a high frequency, typically by applying pulse width modulation (PWM) signals to a high side transistor and a low side transistor arranged in series in a power train. When the high side transistor is on and the low side transistor is off, energy is stored in an inductor, and when the high side transistor is off and the low side transistor is on, the inductor releases energy. See also FIG. 2 and the power switches PS1 and PS2.

In this example, the load current, I_load (plot 100), increases relatively quickly, e.g., due to a suddenly high work load of the processor which is powered by the VR. This causes a drop in the output voltage, Vout (plot 110). When Vout falls below a droop detection threshold, Vdroop_th, the control circuit of the VR detects the presence of a droop. In response, the control increases the current provided by the inductor, I_inductor (plot 101), at the maximum rate possible. However, I_inductor can only increase at a slower rate than I_load, so that the droop continues for some time before the inductor current can catch up with the load current.

This illustrates a problem that occurs during large load transients inside of a VR such as a fully integrated inductive buck-converter voltage regulator (FIVR). Even though the type-3 compensation quickly detects a droop and goes to full duty-cycle, the converter inductance can take a long time to slew to meet the load current. This is especially dramatic for higher output voltages and lower input voltage. In this example, the low input-to-output delta means the slew rate results in a significant droop, e.g., greater than 200 mV, for the ideal load current step. One solution to alleviate this droop is to reduce the current such as by throttling the processor. However, this degrades performance. Another solution, as described herein, is to bypass the main powertrain inductance to provide additional current to the load using a parallel current source (PCS) which augments the current provides by the main current source (MCS), as discussed below.

FIG. 2 depicts an example VR 200 including a parallel current source (PCS) 210 and a Finite State Machine (FSM) 220 for droop mitigation, in accordance with various embodiments. As mentioned, the PCS can be used to augment the current provided by the MCS when a voltage droop is detected. This can reduce the duration and severity of the droop. The VR 200 includes a MCS 250. A power train of the MCS includes first and second power switches, PS1 and PS2, respectively. PS1 may be a p-type transistor such as a p-type metal-oxide-semiconductor field-effect transistor (MOSFET) and PS2 may be an n-type transistor such an n-type MOSFET, in one possible approach. PS1 is a high side switch as it is coupled to a supply voltage Vccin at a power supply node 251 and PS2 is a low side switch as it is coupled to a ground node G. An output node 252 of the MCS provides a voltage and current to a first end of an inductor 253. An opposing second end of the inductor is coupled to an output node 254 of the VR. An output capacitor 255 and a resistive load 256 are also depicted.

The power switches are controlled by a control circuit 260. The control circuit may include a first driver DR1 for driving the control gate of PS1 with a PWM signal, and a second driver DR2 for driving PS2 with a PWM signal which is the inverse of the signal of PS1. The PWM signal for PS1 may have an on time or duty cycle which increases as the load current increases. The control circuit can include a memory 261 which stores instructions which are executed by a processor 262 to provide the functions described herein.

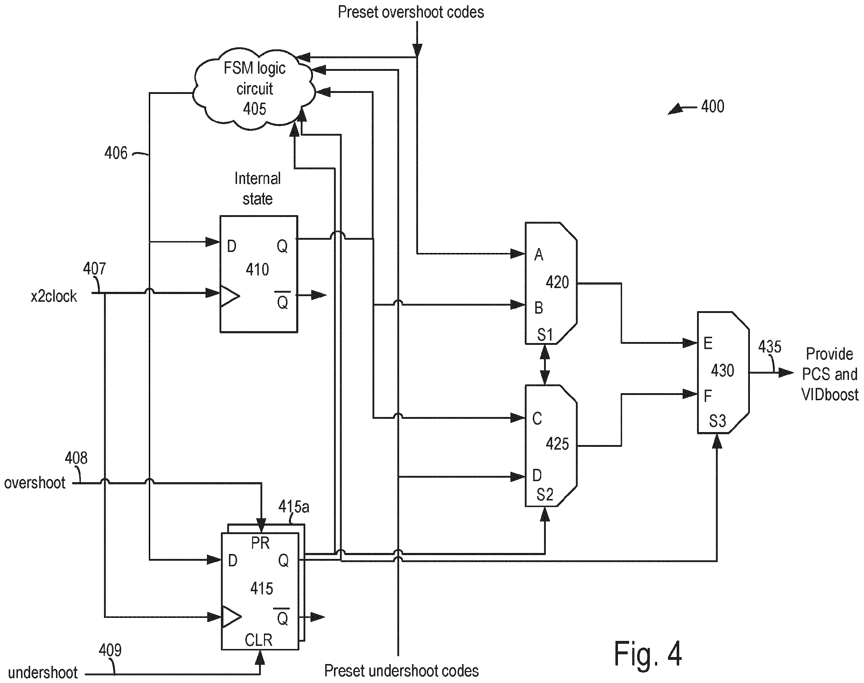

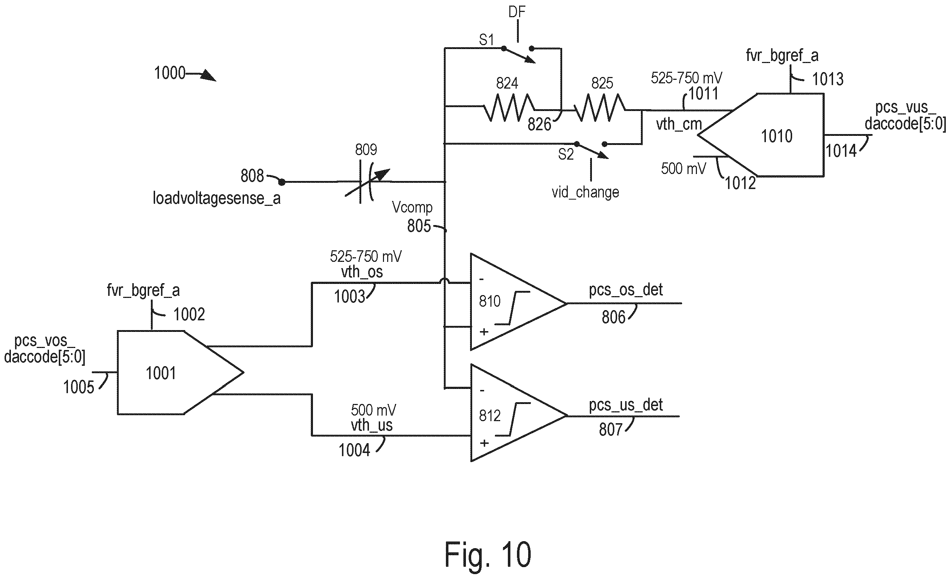

The control circuit 260 implements a feedback control loop 263 based on Vout at the output node 254. To achieve this, the control circuit receives Vout on feedback paths 264 and 266. A high-pass filter (HPF) 270 also receives Vout on feedback paths 266 and 267. The HPF (see also FIG. 10) includes comparators which provide outputs on paths 271 and 272 to an FSM 220. The FSM provides a control signal, CMboost (common mode boost), to the HPF via a path 273, indicating an amount of boost to provide. See also vth_cm in FIG. 10. The FSM can be implemented with hardware and/or software. A hardware implementation is suitable, e.g., when some states transition asynchronously. See also FIG. 4.

The control circuit receives VIDboost on a path 265 from the FSM. VIDboost represents a boost to the set point of the MCS, where the set point is the requested voltage output of the VR.

The FSM provides a digital code, PCS code, on a path 230 to the PCS 210. The PCS includes a digital controller 211 which, in one possible implementation, can include a memory 213 which stores instructions which are executed by a processor 214 to provide the functions described herein. The PCS can be implemented with hardware and/or software. The digital controller can be a microcontroller or microprocessor, for example. The digital controller can receive configurable values of Vin, Vout and Ithreshold from a storage location 212.

The PCS further includes a variable current source 215 which is under the control of the digital controller and powered by Vccin via the path 216. A current output by the current source 215 is provided via a path 217 to the output node 254 of the VR to thereby augment the current output by the MCS. The digital controller can also sense a current on the output node via a path 218.

The VR 200 includes a number of features including a Droop Iso-Vmin Protection (DIP) FSM that coordinates the PCS power train and VR responses, mixed-signal filtering (e.g., analog and digital) used in the droop detection for improved margins and stability, and techniques for automatically adjusting stability parameters digitally.

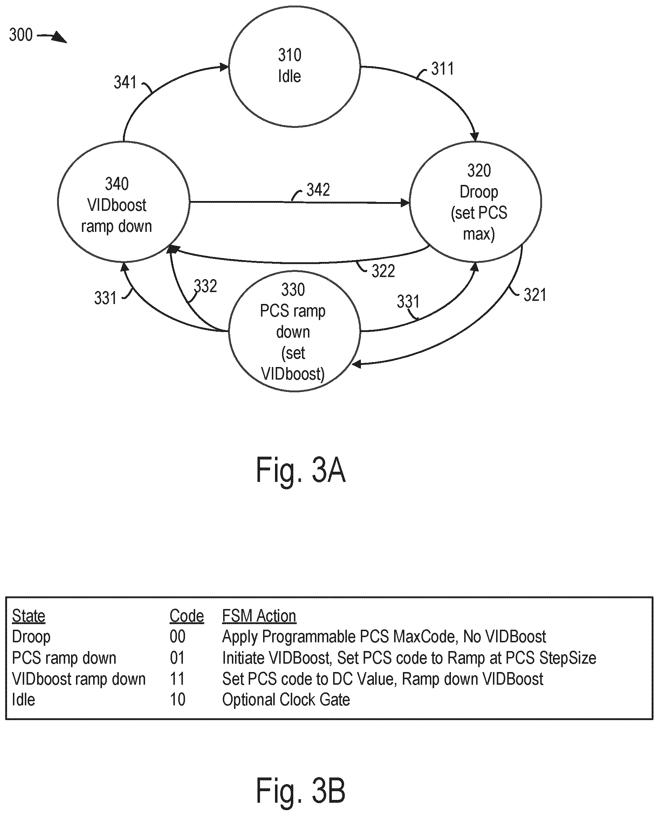

FIG. 3A depicts an example state diagram 300 of the FSM 220 of FIG. 2, in accordance with various embodiments. A FSM can be in one state at a time among a finite number of possible states. In this example, the FSM has four states including an idle state 310, a Droop state 320, a PCS ramp down state 330 and a VIDboost ramp down state 340. The idle state indicates that no droop or droop recovery process is active. The Droop state indicates a droop is detected in which case the PCS is turned on at its maximum programmable rate until the droop is no longer detected, e.g., until the output voltage recovers from the droop. The PCS ramp down state indicates that, in response to the droop no longer being detected, the PCS output is to ramp down, e.g., step down, from its maximum rate. Additionally, VIDboost is to be set to boost the set point of the MCS to a programmable boosted/elevated level. The voltage set point is the requested voltage output of the MCS. This set point can be used by the control circuit 260 to adjust a duty cycles with which it drives the power train. The ramp down of the PCS output current can be concurrent with the MCS providing the MCS output current at the respective elevated or boosted level.

The VIDboost ramp down state 340 indicates that, in response to completion of the PCS ramp down, the MCS output is to ramp down from its boosted level. The VIDboost ramp down state can be considered to be a MCS ramp down state.

The Droop state 320 can be reached in two types of transitions. First, an arrow 311 indicates the FSM can transition from the idle state to the Droop state when there is an asynchronous droop assert, e.g., when Vout falls below an undershoot (e.g., droop) threshold such that a voltage droop is detected. Second, an arrow 342 indicates the FSM can also transition from the VIDboost ramp down state to the Droop state when there is an asynchronous droop assert.

The PCS ramp down state 330 can be reached in one type of transition. Specifically, an arrow 321 indicates the FSM can transition from the Droop state to the PCS ramp down state when there is an asynchronous droop de-assertion, e.g., when Vout has recovered above the droop detection threshold or other recovery threshold such that the voltage droop is no longer detected.

The VIDboost ramp down state 340 can be reached in three types of transitions. First, an arrow 322 indicates the FSM can transition from the Droop state to the VIDboost ramp down state when there is an asynchronous overshoot assertion, e.g., when Vout exceeds an overshoot threshold. Second, an arrow 331 indicates the FSM can transition from the PCS ramp down state to the VIDboost ramp down state through synchronous logic. Third, an arrow 332 indicates the FSM can transition from the PCS ramp down state to the VIDboost ramp down state when there is an asynchronous overshoot assertion.

The Idle state 310 can be reached in one type of transition. Specifically, an arrow 341 indicates the FSM can transition from the VIDboost ramp down state to the idle state through synchronous logic.

Because both the MCS, e.g., a buck converter, and the PCS use voltage sensing and feedback with overlapping bandwidths, an FSM can be used to coordinate the interactions between the two feedback loops. In an example implementation, the FSM has four states and allows for both asynchronous transitions into three of them (e.g., Droop, PCS ramp down, and VIDboost ramp down) and synchronous transitions into two of them (e.g., VIDboost ramp down and Idle). This is possible through a use of Gray code on the two bits of the FSM using asynchronous set/reset flip-flops (FIG. 4).

FIG. 3B depicts an example table of state and FSM action for the state diagram 300 of FIG. 3A, in accordance with various embodiments. The Droop state is associated with a code 00. The corresponding action when entering the state is to apply a programmable PCS MaxCode (setting the maximum current output of the PCS) with no VIDboost (so that the MCS current output is not boosted).

The PCS ramp down state is associated with a code 01. The corresponding action when entering the state is to initiate VIDboost and set a PCS code to ramp down the PCS output at a specified StepSize.

The VIDboost ramp down state is associated with a code 11. The corresponding action when entering the state is to set a PCS code to a DC value and ramp down VIDboost.

The idle state is associated with a code 10. The corresponding action when entering the state is to perform an optional clock gating.

FIG. 4 depicts an example circuit 400 which implements the FSM 220 of FIG. 2, in accordance with various embodiments. The FSM can be implemented using a hybrid asynchronous/synchronous approach which includes two sets of asynchronous set/reset flip-flops. Moreover, the clocked states can be overridden with a single bit due to the Gray coding of the FSM states as in FIG. 3B.

The circuit 400 includes an FSM logic circuit 405, first and second flip-flop circuits 410 and 425, respectively, and first, second and third multiplexers 420, 425 and 430, respectively. The flip-flop 410 can be a meta flop. A logic circuit is an electronic circuit that performs a logical operation on one or more binary inputs to produce a binary output. In other words, it processes digital signals (typically represented by 0s and 1s) based on predefined logical rules. The basic building blocks of logic circuits are logic gates. These gates perform basic logical operations such as AND, OR, NOT, NAND, NOR, XOR, etc. Each gate takes one or more binary inputs and produces a binary output based on the specific logic function it performs. Logic circuits can include combinational and sequential logic circuits. Combinational logic circuits generate outputs solely based on their current inputs, while sequential logic circuits have memory elements (like flip-flops) that allow them to store information about past inputs and outputs. Based on five inputs in this example, the FSM logic circuit 405 provides an output on a path 406.

Each flip-flop circuit (flip-flop) may be a D-type flip-flop which includes a data (D) input, a clock input (shown by a triangle), a data output Q and an inverted data output Q bar. Additionally, for the flip-flops 415 and 415a, a top input is a preset input (PR) and a bottom input is a clear input (CLR). The flip-flop has two stable states and can store one bit of state information. When the clock is low, Q=0 regardless of D and when the clock is high, Q=0 or 1 if D=0 or 1, respectively. A high signal to the preset input will cause the Q output to set to 1. Similarly, a high signal at the clear input will cause the Q output to reset to 0. The flip-flop may be triggered by a positive edge of the clock (x2clock), for example.

The D input of each flip-flop receives a common input from the FSM logic circuit on the path 406 and the clock input of each flip flop receives a common clock signal x2clock on a path 407. The flip-flops 415 and 415a additionally receive an overshoot signal at their preset input via a path 408 and an undershoot signal at their clear input via a path 409. In one approach, if an overshoot is detected, the overshoot signal is high so that Q=1 and if an undershoot is detected, the undershoot signal is high so that Q=0.

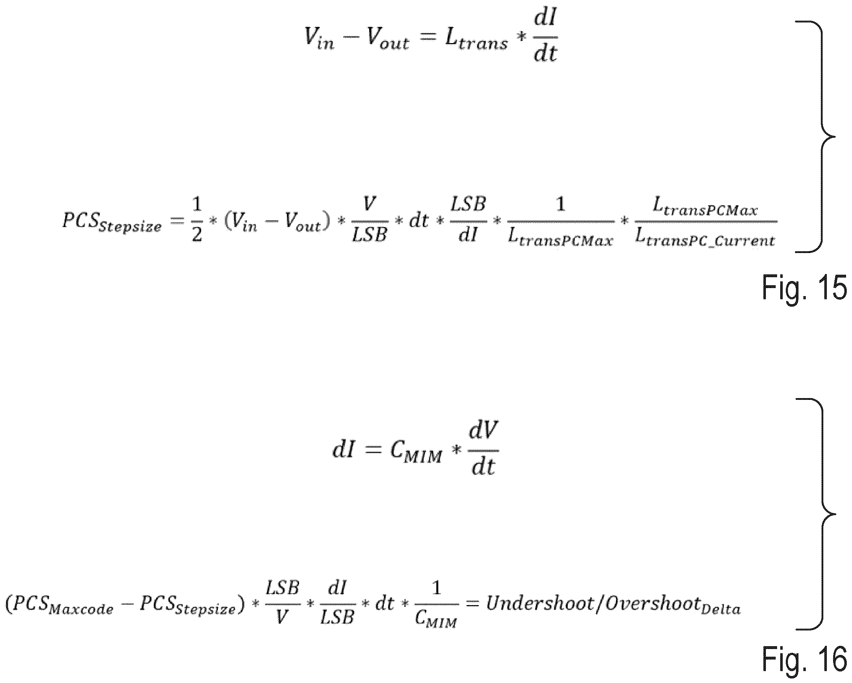

The Q output of the flip-flop 410 is provided to the FSM logic circuit 405, to an input B of the multiplexer 420 and to an input C of the multiplexer 425. The Q output of the flip-flop 415 is provided to the FSM logic circuit and to the select input S1S3 of the multiplexer 430. The Q output of the flip-flop 415a is provided to the FSM logic circuit and to the select inputs S1 and S2 of the multiplexers 420 and 425, respectively. Based on the select signal, the multiplexers 420 and 425 will provide outputs to inputs E and F, respectively, of the multiplexer 430, and the multiplexer 430 will provide one of these inputs on an output path 435 to provide control signals such as PCS and VIDboost. The output is used to control the PCS of the VR. For example, when overshoot is asserted, Q=1 is provided to S1 and S3 to pass preset overshoot codes at A and E, respectively. When undershoot is asserted, Q=0 is provided to S2 and S3 to pass preset undershoot codes at D and F, respectively. The undershoot and overshoot codes can be predetermined by fuses or by another agent (such as a software/hardware calculation for overshoot discussed below in connection with FIG. 16).

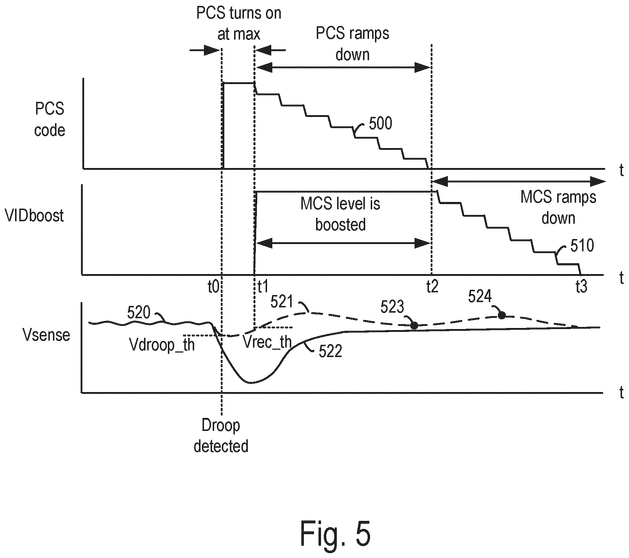

FIG. 5 depicts example plots of PCS code, Voltage Identifier boost signal (VIDboost) and sensed voltage (Vsense) versus time in an example progression of the FSM 220 of FIG. 2, in accordance with various embodiments. The plot 520 represents Vsense, the sensed output of the VR, before a droop is detected at t0. Plots 521 and 522 represent Vsense after the droop is detected with and without, respectively, the droop recovery process described herein. As can be seen, the droop recovery process allows the droop to recover and stabilize more quickly.

Before t0, the FSM is in the idle state. At time t0, a droop is detected, as can be detected by Vsense falling below a droop threshold, Vdroop_th, and the FSM transitions to the Droop state at t0-t1. In this time period, PCS turns on at a maximum level (a first level or respective elevated level) to provide current to the VR output node as soon as possible to help counteract the droop. The PCS code is a proxy for the PCS current in this example such that a higher code value corresponds to a higher PCS current. The elevated level can be based on, e.g., a function of, a power consumption of a processor or other load which is powered by the VR such that the elevated level is greater when the power consumption is greater.

The voltage recovers at t1, as can be detected by Vsense increasing above a recovery threshold, Vrec_th. Vrec_th is shown as being higher than Vdroop_th in this example but could be another level such as equal to Vdroop_th. At t1, the FSM transitions to the PCS ramp down state and causes the PCS code to begin to ramp down (plot 500). The code can ramp down, e.g., step down, in value over time so that the PCS current steps down similarly from the maximum level to zero, for example. The step size and step duration can be programmable. Also in this state, the VIDboost level is increased so that the MCS level is boosted. As mentioned, the VID represents a set point or requested voltage output of the VR. By temporarily boosting the requested voltage output, the MCS starts to boost its current output to continue to help the output voltage recover and avoid a subsequent droop. The MCS can be boosted at a fixed level (a second level or respective elevated level) from t1-t2 while the PCS ramps down. Ramping down the PCS current at the same time the MCS is boosted helps to gradually remove the effect of the PCS to allow the MCS to fully regain control of the VR output.

At t2, the PCS ramp down has completed and this causes the FSM to transition to the VIDboost ramp down state. At t2-t3, VIDboost is stepped down from its boosted level to zero, for instance (plot 510). The step size and step duration can be programmable.

At t3, the droop recovery process is completed when the MCS completes its ramp down, and, in response, the FSM transitions to the idle state.

Generally, the DIP FSM remains in the Idle state until a transient of sufficient magnitude trips an undershoot comparator (see, e.g., comparator 812 in the HPF of FIG. 10) which transitions the DIP FSM to the Droop state where it will apply a predefined code to the PCS power train which, in response, will provide a fixed amount of current. This current is injected into the edge of the power grid, e.g., via the output node 254 of the VR, where it will supplement inductor current for the load from the MCS. This PCS current will continue to be injected and, if the load current is still larger than the PCS current injected, a voltage droop will occur although at a magnitude significantly smaller due to the supplementation as illustrated in the example above. Since the VR compensator uses type-3 feedback, in an example implementation, there is no need to communicate that a droop is occurring in the drooping state of the FSM as the voltage signal will have appropriately indicated the droop prior to FSM transition.

This avoids placing the initiation of the boost at a less optimal point of the droop. If the load is smaller than the supplemental current provided by PCS or simply enough time has passed for the droop to recover, the droop comparator will de-assert as the voltage is brought back to the set point. This will transition the DIP FSM into the PCS ramp down state to begin transitioning the injected current to the buck regulator's control loop from the PCS power train. As mentioned, the VR slew rate is limited, so dropping the supplemental current all at once would lead to a large re-droop and LCOs. To minimize these negative effects, the PCS ramp down state can take two actions. A first action is reducing the current according to a predefined amount of current per FSM clock rate which is lower than the slew rate of the inductor's capability at those conditions. A second action is applying a signal to the buck regulator's compensation circuitry to raise the voltage set point (VIDboost) at very high speed. This signal provides a feedforward mechanism to increase duty cycle in preparation for a voltage droop caused by the PCS power train, effectively giving a phase margin increase for the current handoff between the PCS and the main buck converter or MCS.

In FIG. 5, the PCS codes drop at a relatively slow rate due to the low dropout condition that limits the slew. Even though the inductor is still fully turned on, a re-droop occurs (point 523) halfway through the state transition; however, it is not sufficient to cause a transition back to the Droop state. After the PCS powertrain has reached its DC calculated current or, in the case of a load release of the transient where the overshoot comparator asserts, the FSM advances to the VIDboost ramp down state where it now brings the main buck converter's voltage set point back down to its DC operating state while the PCS power train remains in a DC configuration. Depending on the time this transition takes, there may be a temporary increase or bounce (point 524) in the voltage as the type-3 closed loop settles back to its intended duty cycle. Lastly, the FSM returns to an Idle state to await a future transient.

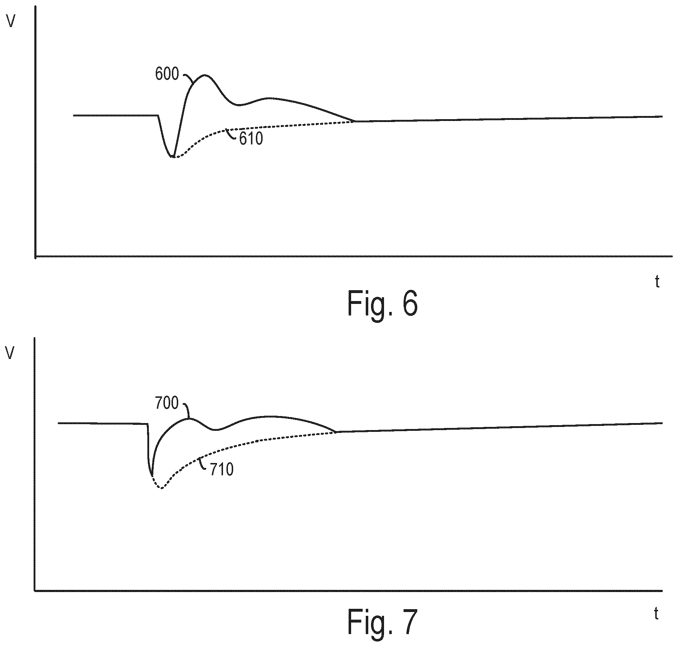

Advantageously, the FSM need not know the exact voltage shifts but instead relies on the analog feedback loop of the main converter to regulate according to the sensed voltage (Vsense) as long as it is within the bounds of the undershoot and overshoot thresholds. Calculation of these thresholds is discussed further below. FIGs. 6 and 7 show test chip data with on chip synthetic loads causing both mild and large dI/dt.

FIG. 6 depicts plots of output voltage versus time in an example response of the FSM 220 of FIG. 2 when the VR 200 has a relatively low dI/dt event occur, in accordance with various embodiments. Plot 600 depicts the case with droop mitigation as discussed herein and plot 610 depicts the case of the droop mitigation turned off. There is no droop mitigation advantage under this scenario since the dI/dt event is so mild.

FIG. 7 depicts plots of output voltage versus time in an example response of the FSM 220 of FIG. 2 when the VR 200 has a relatively high dI/dt event occur, in accordance with various embodiments. Plot 700 depicts the case with droop mitigation as discussed herein and plot 710 depicts the case of the droop mitigation turned off. The higher dI/dt event results in an even smaller undershoot and a faster droop recovery.

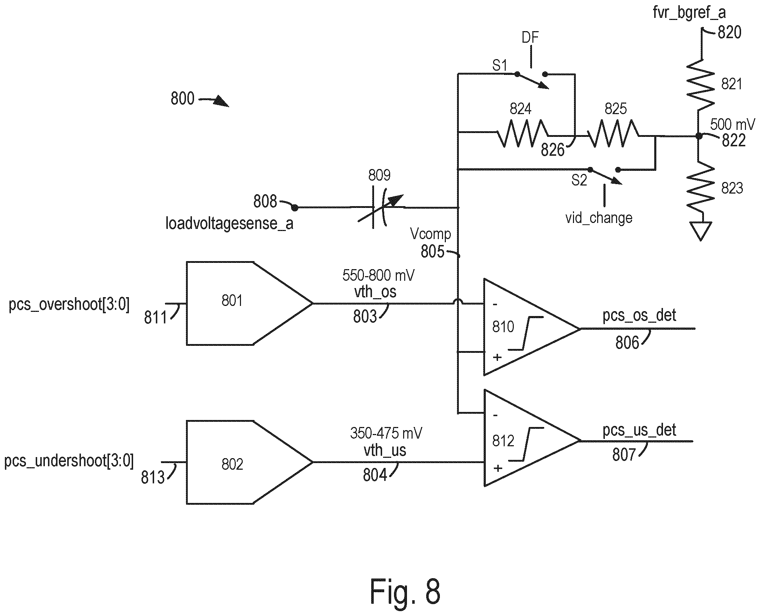

FIG. 8 depicts a comparative example implementation of the HPF 270 of FIG. 2 as alternating current (AC)-coupled filter 800 with a fixed comparison voltage Vcomp, in accordance with various embodiments. The droop mitigation solutions provided herein can include an AC-coupled detection scheme with LCO prevention. As mentioned, the DIP FSM can rely on two high-speed continuous time comparators to drive the asynchronous transitions. The continuous time comparator embodiments may be implemented in any fashion including ping-pong architectures. This signal can be created using a fully AC-coupled filter from the output domain's sense point. The desired behavior is that the main buck regulator will provide the DC set point and the comparator will only concern itself with detecting droops at very high speed by coupling onto the output signal at a frequency whose closed loop impedance produces minimal drift. This solution allows for improved circuit tradeoffs between precision and speed for the DIP FSM comparators.

In the comparative example of FIG. 8, the HPF 800 includes digital-to-analog converters (DACs) 801 and 802 which receive overshoot and undershoot values pcs_overshoot[3:0] and pcs_undershoot[3:0], respectively, on input paths 811 and 813, respectively. The corresponding analog values are an overshoot and undershoot threshold vth_os and vth_us (Vdroop_th) on paths 803 and 804, respectively, which are provided to an inverting input (-) of an overshoot comparator 810 and a non-inverting input (+) of an undershoot comparator 812, respectively. A comparator voltage, Vcomp, on a path 805 is input to the non-inverting input of the comparator 810 and the inverting input of the comparator 812. An example range ofvth_os is 550-800 mV and an example range of vth_us is 350-475 mV.

If the non-inverting (+) input is greater than the inverting (-) input, the output goes high. If the inverting input is greater than the non-inverting, the output goes low. Thus, if Vcomp>vth_os, the comparator 810 outputs a high value (a 1 bit) on its output path 806 as pcs_os_det, indicating an overshoot is detected. If Vcomp<vth_os, the comparator 810 outputs a low value (a 0 bit) indicating an overshoot is not detected. If vth_us>Vcomp, the comparator 812 outputs a 1 on its output path 807 as pcs_us_det, indicating an undershoot is detected. If vth_us<Vcomp, the comparator 812 outputs a 0, indicating an undershoot is not detected. The values pcs_os_det and pcs_us_det can be output from the HPF on paths 271 and 272, respectively, to the FSM in the VR 200 of FIG. 2.

The path 805 is coupled to a node 808 via a variable capacitor 809, where the node 808 receives the signal loadvoltagesense_a, e.g., the sensed load voltage. The path 805 is coupled to a switch S1, a resistor 824 and a switch S2. S1 is controlled by a signal DF (Direct Fuse) to couple the path 805 to a node 826 which is between the series resistors 824 and 825 for the purpose of modifying the High Pass Filter tau permanently due to post-Silicon determination. S2 is controlled by a signal vid_change to couple the path 805 to a node 822 which is between series resistors 821 and 823 for the purpose of modifying the High Pass Filter tau temporarily due to a 3rd party (i.e., Power Management) request. The resistor 821 is coupled to a node 820 which receives a voltage fvr_bgref_a. Example values for the resistors 821, 823, 824 and 825 are 40, 65, 85 and 85 kOhms, respectively. An example voltage at the node 822 is 500 mV. This value is fixed according to the values of the resistors 821 and 823 and fvr_bgref_a. Accordingly, the path 805 can be set at one of three values. When S2 is closed (conductive) and S1 is open (nonconductive), Vcomp has the same voltage as the node 822. When S1 is closed and S2 is open, Vcomp is equal to the voltage at the node 826, where in turn is equal to the voltage at the node 822 minus a voltage drop across the resistor 825. When S1 and S2 are both closed, Vcomp is equal to the voltage at the node 822 minus a voltage drop across the resistors 824 and 825. S1 and S2 thus make the filter configurable as to the value of Vcomp.

The capacitor 809 is biased by Vcomp. The filter is AC coupled because it will only pass through high-frequency signals of loadvoltagesense_a to the path 805, and the frequency at which the filter stops allowing loadvoltagesense_a to pass through is set by the resistance-capacitance (RC) of the filter.

Generally, the AC coupled design provides the DC bias for the filter which is statically generated, and the comparators can be configured using DACs. However, in this configuration, some restraints are placed on the tuning parameters because of LCOs. As mentioned, the filter couples onto the DC set point of the buck regulator; however, this approach also provides a temporary increase in set point during the PCS ramp down state to ensure the buck regulator will provide current previously injected by the PCS power train. This means, under certain conditions, the set point can move temporarily upward due to a VIDboost event which will raise the undershoot threshold upward when the filter couples or drifts to it. In the case where the set point movement in DC is larger than the undershoot threshold, an irrecoverable oscillation may occur (see FIG. 10) since, even at steady-state, the AC-coupled filter will believe a droop is occurring. The HPF design of FIG. 10 overcomes this problem.

In particular, in FIG. 8, the voltage (Vcomp) provided to the comparators for comparison with vth_os or vth_us is a fixed level such as 500 millivolts, e.g., a common mode voltage of the comparators. In the DC state, Vcomp is tuned to 500 millivolts. This allows the DACs 801 and 802 to set the points at which the comparators trip. For example, with the DC set point as 500 mV, the undershoot comparator 812 can be set to trip at 25 mV below the set voltage of the VR. To achieve this, the DAC 802 can be programmed with pcs_undershoot[3:0] to output 475 mV, which is 25 mV below Vcomp=500 mV. In another example, the overshoot comparator 810 can be set to trip at 50 mV above the set voltage of the VR. To achieve this, the DAC 801 can be programmed with pcs_overshoot[3:0] to output 550 mV, which is 50 mV above Vcomp=500 mV.

Vcomp thus remains at 500 mV regardless of the overshoot or undershoot voltage, and regardless of the output voltage of the VR. The overshot and undershoot points are therefore be set by the DACs relative to Vcomp without knowing what the set point is.

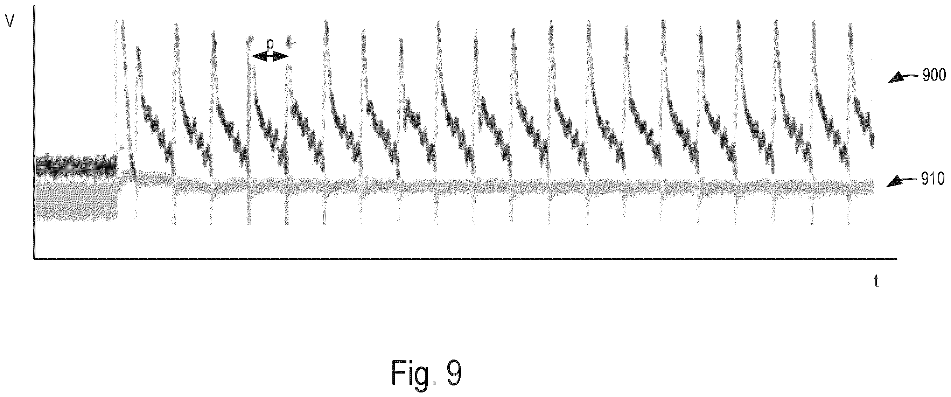

FIG. 9 depicts plots of voltage versus time in an irrecoverable oscillation condition which can occur with the filter 800 of FIG. 8. The plot 900 depicts the output voltage of the VR in a severe irrecoverable oscillation with a period p. The plot 910 depicts Vccin, which is used for diagnostic understanding of the system. The oscillation can be reduced by reducing VIDboost, increasing the undershoot threshold or using a maximum PCS code which is less than desired. However, these measures impact the droop mitigation.

FIG. 10 depicts another example implementation of the HPF 270 of FIG. 2 as an AC-coupled filter 1000 with a programmable Vcomp to avoid the irrecoverable oscillation of FIG. 9, in accordance with various embodiments. The filter 1000 includes some of the like-numbered components of FIG. 8. However, instead of the two DACs 801 and 802, a single DAC 1001 (a first DAC) receives a signal pcs_vos_daccode[5:0] on its input path 1005 and provides the outputs vth_os and vth_us on paths 1003 and 1004, respectively, to the inverting input of the comparator 810 and to the non-inverting input of the comparator 812, respectively. Vth_os may range from 525-750 mV, for example, the same range as vth_cm. vth_us may be fixed at 500 mV, for example. The DAC 1002 receives the voltage fvr_bgref_a on a path 1002 as its power supply. Additionally, in place of the series resistors 821 and 822 (a resistive divider), a second DAC 1010 provides a common mode threshold voltage vth_cm on a node 1011 and a voltage such as 500 mV on an output path 1012. Vth_cm may range from 525-750 mV, for example. The DAC 1010 receives fvr_bgref_a on a path 1013 as its power supply. The DAC 1010 also receives a signal pcs_vus_daccode[5:0] on its input path 1014.

Compared to FIG. 8, the AC-coupled filter 1000 is rearranged and an additional digital feedforward mechanism is applied with the DAC 1010 to guarantee that LCOs cannot occur indefinitely with a quiescent load. The filter reverses the roles by setting the comparator threshold to be static and instead set the undershoot threshold using the filter's DC bias structure. This has two benefits. First, the undershoot can be modulated but will move to the new set point slowly at a rate slower than the closed loop impedance of the main regulator. Second, modulating the undershoot threshold automatically modifies the DC overshoot threshold without any change in the overshoot threshold DAC. Stated differently, the window between undershoot and overshoot remains constant even as the undershoot threshold is modulated. This simplifies the coordination of automatic tuning logic.

With the filter 1000, the FSM can inject a feedforward mechanism by way of communicating the VIDboost voltage to the common mode of the AC-coupled filter. The technique is referred to as common mode (CM) boosting.

In this approach, an undershoot can be detected by setting vth_us as a fixed value and varying Vcomp, which is a programmable comparison voltage. The undershoot threshold is thus set using the common mode voltage as provided by the programmable DAC 1010. For example, if the desired undershoot voltage is 25 mV below the regulated voltage, vth_cm is set to 525 mV (since 525-500 mV=25 mV). An advantage of this approach is that if vth_cm were to change instantaneously, because it's part of the common mode circuit, the effect is slowed because it's required to go through the RC circuit before reaching the comparator 812. For example, the resistors 824 and 825 slow down the absorption of the new value of vth_cm on to the capacitor 809. Thus, the undershoot voltage can be changed with a high frequency but it is does not take effect immediately. As with pulse width modulation (PWM), the effective voltage will change over time.

This allows a number of possibilities. For example, vth_cm could repeatedly alternate between 525 mV and 575 mV so that the resulting vth_cm is between these values, e.g., about 550 mV. This would result in an undershoot voltage which is 50 mV below the regulated voltage (since 550-500 mV=50 mV). vth_cm could therefore be adjusted with fine granularity by adjusting a duty cycle of the DAC 1010. Vth_cm can be adjusted during the VIDboost ramp down phase, for example.

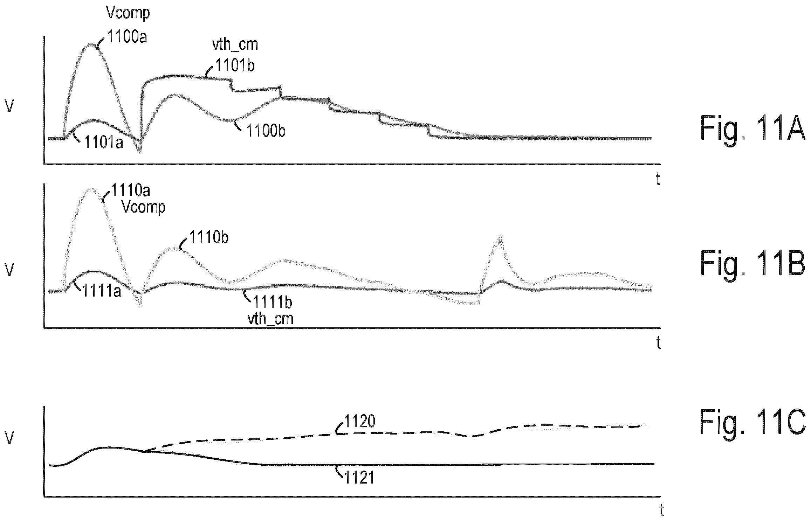

FIG. 11A depicts plots of voltage versus time for a high-pass (HP) common mode with boosting (plots 1100a and 1100b) and a HP filter digital-to-analog control (DAC) voltage (plots 1101a and 1101b), in accordance with various embodiments.

FIG. 11B depicts plots of voltage versus time for a HP common mode without boosting (plots 1110a and 1110b) and a HP filter DAC voltage (plots 1111a and 1111b), in accordance with various embodiments.

FIG. 11C depicts plots of voltage versus time of an effective trip point relative to a VR set point with no boosting (plot 1120) and with boosting (plot 1121), in accordance with various embodiments.

The simulated scenario in FIGs. 11A-11C is of a large load current release which generates a large overshoot and creates a drift in the AC filter such that a false undershoot is detected by the AC coupled filter. The filter 1000 of FIG. 10 is used.

In FIG. 11A, the plots 1100a and 1100b show the capacitively coupled sense line voltage (Vcomp) that the comparators reference. The plots 1101a and 1101b depict the output from the DAC 1010 with the node labeled vth_cm. Initially, Vcomp>vth_cm. The voltages then transition to Vcomp<vth_cm. With CMBoost set, vth_cm increases to an elevated level and then steps down gradually. This balances the shift in the comparator set point caused when Vcomp>vth_cm during the overshoot.

In FIG. 11B, the plots 1110a and 1110b depict Vcomp and the plots 1111a and 1111b depict vth_cm. Vcomp>vth_cm during the majority of the time, which allows for additional common mode drift of the filter.

In FIG. 11C, the effective trip point (plot 1120) increases gradually when there is no CMboosting sent to the HP Filter. When there is boosting, the trip point is relatively constant (plot 1121).

The droop mitigation solution can thus apply boost to both the buck regulator set point as well as the AC-coupled filter common mode voltage such that the trip point for the DIP FSM will converge to the desired DC threshold below the target set point. Because the integrator pole of the type-3 compensation and the AC-coupled filter see the same boost level, even if it is modulated due to the FSM, they will converge to always have the comparator trip point remain a specific amount below the DC set point of the main regulator regardless of the loading pattern.

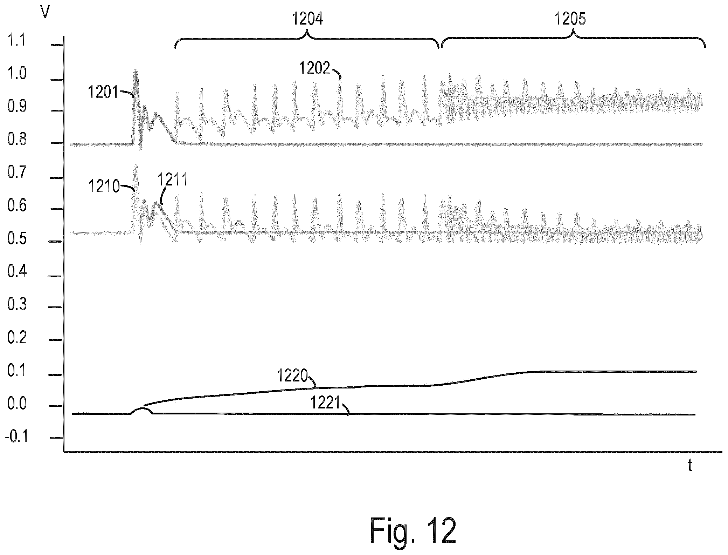

FIG. 12 depicts plots of voltage versus time of an output voltage, a high-pass coupled voltage and an effective threshold, in accordance with various embodiments. The plots 1210 and 1202 depict the VR output voltage with the droop mitigation techniques enabled and disabled, respectively. With the droop mitigation techniques enabled, there is an initial transient before the voltage returns to a fixed level. With the droop mitigation techniques disabled, there is a first time period 1204 where the two cases have the same output voltage, followed by a second time period where plot 1202 depicts periodic oscillations, followed by a third period where the plot 1202 has higher-frequency oscillations but with a reduced swing, compared to the time period 1204.

Plot 1210 depicts an initial transient followed by periodic oscillations in the time periods 1204 and 1205 which follow a similar pattern as the plot 1202.

Plot 1220 depicts a continuous gradual increase in the effective threshold. Plot 1221 remains at a fixed level except for a brief upward blip.

The plots represent result from a simulation over a longer time duration to see the end result of the lack of common mode drift feedforward signaling. The plots 1201 and 1202 depict the regulated output voltage, the plots 1210 and 1211 depict the AC-coupled signal that the comparator responds to, and the plots 1220 and 1221 depict the effective threshold below DC. After the effective threshold is above the DC set point, the comparator and main regulator will be at indefinite contention since the placement of FSM into the Idle state pushes the set point back to DC, and the comparator firing above the DC set point ensures the FSM transitions to VIDboost after the Droop state.

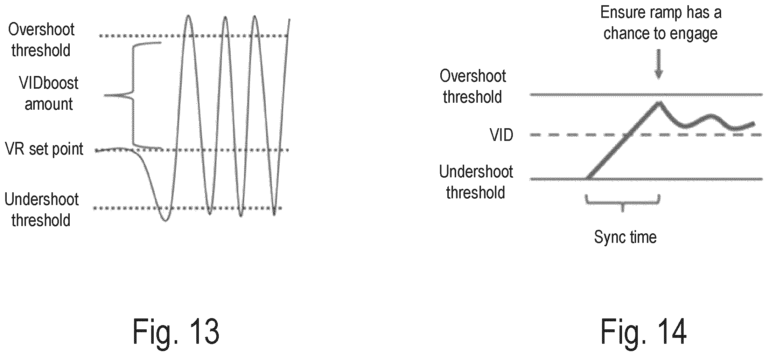

FIG. 13 depicts a plot of output voltage versus time, showing example tuning parameters, in accordance with various embodiments. The tuning parameters can include the overshoot threshold, the VR set point, the VIDboost amount which is the difference between the overshoot threshold and the VR set point, and the undershoot threshold.

FIG. 14 depicts a plot of output voltage versus time, showing an example synchronization time, in accordance with various embodiments. The output voltage increases from an undershoot threshold toward an elevated level which is below an overshoot threshold. The output voltage eventually settles near the level associated with the VID. A synchronization time ensures that the ramp has a chance to engage.

The above discussion has noted the interactions of the undershoot/overshoot thresholds and the VIDboost amount. An additional issue is tradeoffs for tuning the VR. Since the PCS power train can provide a dynamic range of current based on how many circuit instances are utilized, the output domain can have a wide range of output decoupling, and a number of phases and inductance of the buck converters. This gives similar variability of tuning as a buck converter's main compensation loop would encounter, and similarly less ideal results if compensation isn't tailored to each scenario and output filter combinations. If one were to tune the parameters under the worst conditions such as when a single inductor phase is operating with lower input voltage and high output voltage under a power virus scenario, the maximum PCS code would be as high as possible and the step size of the PCS ramp would be slow.

Thus, when a large PCS current is required and ramp rate must be slow, the overshoot and corollary VIDboost should be large to ensure stability. Therefore, it is advantageous to track the conditions where a large PCS current is not required (e.g., under a low frequency or a low power license) and when a higher slew rate may be possible (e.g., in low output/high input voltage scenarios or many parallel phase inductance configurations such as in the power state PS0, a full performance state).

An example tuning optimization process can involve three processes. A first process step involves setting a slew rate (a maximum rate of change of current over time) of the PCS ramp as a function of voltages and active inductor phases. A second process involves setting the overshoot to undershoot window as a function of a power virus load conditions, slew rate, and amount of decoupling. A third process involves setting the VIDboost/CMBoost based on the DC overshoot threshold generated from the window and undershoot threshold.

FIG. 15 depicts equations for calculating a slew rate of an FSM, in accordance with various embodiments. The slew rate is modeled based on a first order approximation assuming the output voltage is close to the set point. Vin is the input voltage of the VR, Vout is the output voltage, Ltrans is the transient inductance and dI/dt is a rate of change of the inductor's current.

The PCS step size and thus the slew rate of the FSM can be calculated as shown. The calculation can be dedicated in register transfer language (RTL) using fixed precision addition and shift operations to approximate the equation. The values of ½, V/LSB, dt, LSB/dI and 1/LtransPCmax can be aggregated into a single fuse value that embodies all circuit-specific and inductor transient performance. The value Vin-Vout can be calculated based on the converter's set point given by a Power Management Agent. And lastly, LtransPCmax and LtransPC_current are variables that provide a method to adjust transient inductance shifts based on Phase Count (PC). The PCS step size calculation can be implemented with hardware and/or software.

FIG. 16 depicts equations for modeling decoupling and FSM bandwidth, in accordance with various embodiments. Similar to slew rate, the decoupling and FSM bandwidth is modeled based on a first order approximation of the decoupling filter. dI is a change in current based on a capacitance of a MIM capacitor, Cmim, and a rate of change of voltage, dV/dt.

After the PCS step size is calculated and the maximum load current is provided from power management agents, the remaining electrical characteristics can be fused and, based on reduced precision digital calculations, a delta between overshoot and undershoot windows can be calculated for any condition. The window calculation can be implemented with hardware and/or software.

The VIDboost/CMBoost is then calculated based off the window and the undershoot threshold. The VIDboost/CMBoost calculation can be implemented with hardware and/or software.

By modulating these parameters, the overshoot penalty for enabling the feature can be reduced by many tens of mV and the number of devices can be drastically reduced under low ICCmax conditions, allowing for lower power losses for a single droop mitigation since less gate capacitance is discharged for a PCS power train single pulse. This makes the solution viable for implementation at lower voltages where product operation is either more likely or of higher monetary value.

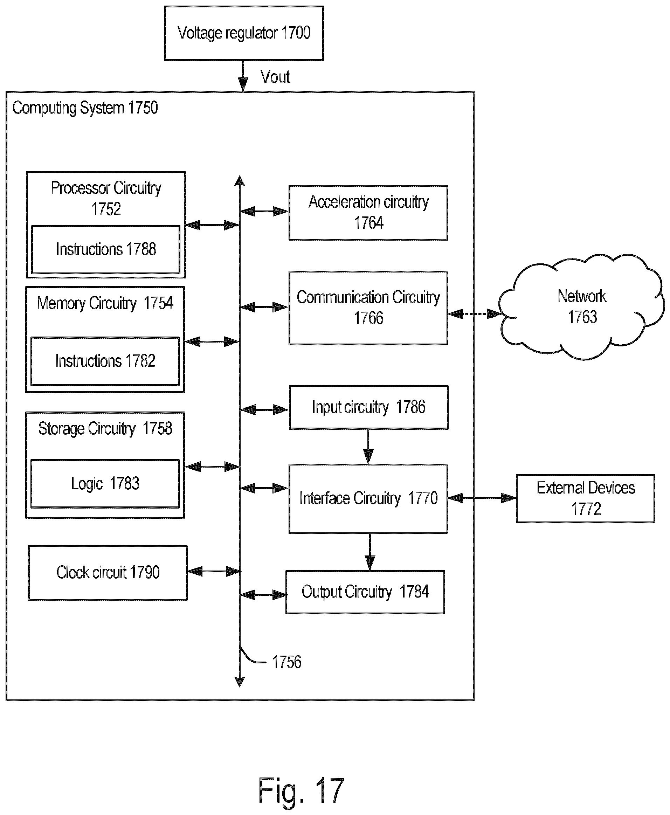

FIG. 17 illustrates an example of components that may be present in a computing system 1750 for implementing the techniques (e.g., operations, processes, methods, and methodologies) described herein.

The computing system 1750 may include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 1750, or as components otherwise incorporated within a chassis of a larger system. For one embodiment, at least one processor 1752 may be packaged together with computational logic 1782 and configured to practice aspects of various example embodiments described herein to form a System in Package (SiP) or a System on Chip (SoC).

The voltage regulator 1700 may represent the voltage regulator 200 of FIG. 2, for example. The voltage regulator can provide a voltage Vout to one or more of the components of the computing system 1750. The memory circuitry 1754 may store instructions and the processor circuitry 1752 may execute the instructions to perform the functions described herein.

The system 1750 includes processor circuitry in the form of one or more processors 1752. The processor circuitry 1752 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 1752 may include one or more hardware accelerators (e.g., same or similar to acceleration circuitry 1764), which may be microprocessors, programmable processing devices (e.g., FPGA, ASIC, etc.), or the like. The one or more accelerators may include, for example, computer vision and/or deep learning accelerators. In some implementations, the processor circuitry 1752 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 1752 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low-voltage processor, an embedded processor, or any other known processing elements, or any suitable combination thereof. The processors (or cores) 1752 may be coupled with or may include memory/storage and may be configured to execute instructions stored in the memory/storage to enable various applications or operating systems to run on the platform 1750. The processors (or cores) 1752 is configured to operate application software to provide a specific service to a user of the platform 1750. In some embodiments, the processor(s) 1752 may be a special-purpose processor(s)/controller(s) configured (or configurable) to operate according to the various embodiments herein.

As examples, the processor(s) 1752 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 1752 may be a part of a system on a chip (SoC), System-in-Package (SiP), a multi-chip package (MCP), and/or the like, in which the processor(s) 1752 and other components are formed into a single integrated circuit, or a single package, such as the Edison^{™} or Galileo^{™} SoC boards from Intel^{®} Corporation. Other examples of the processor(s) 1752 are mentioned elsewhere in the present disclosure.

The system 1750 may include or be coupled to acceleration circuitry 1764, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 1764 may comprise logic blocks or logic fabric and other interconnected resources that may be programmed (configured) to perform various functions, such as the procedures, methods, functions, etc. of the various embodiments discussed herein. In such implementations, the acceleration circuitry 1764 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 1752 and/or acceleration circuitry 1764 may include hardware elements specifically tailored for machine learning and/or artificial intelligence (AI) functionality. In these implementations, the processor circuitry 1752 and/or acceleration circuitry 1764 may be, or may include, an AI engine chip that can run many different kinds of AI instruction sets once loaded with the appropriate weightings and training code. Additionally or alternatively, the processor circuitry 1752 and/or acceleration circuitry 1764 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 1752 and/or acceleration circuitry 1764 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin provided by Huawei^{®}, and/or the like. In some hardware-based implementations, individual subsystems of system 1750 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 1750 also includes system memory 1754. Any number of memory devices may be used to provide for a given amount of system memory. As examples, the memory 1754 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory 1754 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 1754 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 1758 provides persistent storage of information such as data, applications, operating systems and so forth. In an example, the storage 1758 may be implemented via a solid-state disk drive (SSDD) and/or high-speed electrically erasable memory (commonly referred to as "flash memory"). Other devices that may be used for the storage 1758 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 1754 and/or storage circuitry 1758 may also incorporate three-dimensional (3D) cross-point (XPOINT) memories from Intel^{®} and Micron^{®}.

The memory circuitry 1754 and/or storage circuitry 1758 is/are configured to store computational logic 1783 in the form of software, firmware, microcode, or hardware-level instructions to implement the techniques described herein. The computational logic 1783 may be employed to store working copies and/or permanent copies of programming instructions, or data to create the programming instructions, for the operation of various components of system 1750 (e.g., drivers, libraries, application programming interfaces (APIs), etc.), an operating system of system 1750, one or more applications, and/or for carrying out the embodiments discussed herein. The computational logic 1783 may be stored or loaded into memory circuitry 1754 as instructions 1782, or data to create the instructions 1782, which are then accessed for execution by the processor circuitry 1752 to carry out the functions described herein. The processor circuitry 1752 and/or the acceleration circuitry 1764 accesses the memory circuitry 1754 and/or the storage circuitry 1758 over the interconnect (IX) 1756. The instructions 1782 direct the processor circuitry 1752 to perform a specific sequence or flow of actions, for example, as described with respect to flowchart(s) and block diagram(s) of operations and functionality depicted previously. The various elements may be implemented by assembler instructions supported by processor circuitry 1752 or high-level languages that may be compiled into instructions 1788, or data to create the instructions 1788, to be executed by the processor circuitry 1752. The permanent copy of the programming instructions may be placed into persistent storage devices of storage circuitry 1758 in the factory or in the field through, for example, a distribution medium (not shown), through a communication interface (e.g., from a distribution server (not shown)), over-the-air (OTA), or any combination thereof.

The IX 1756 couples the processor 1752 to communication circuitry 1766 for communications with other devices, such as a remote server (not shown) and the like. The communication circuitry 1766 is a hardware element, or collection of hardware elements, used to communicate over one or more networks 1763 and/or with other devices. In one example, communication circuitry 1766 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 1766 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 1756 also couples the processor 1752 to interface circuitry 1770 that is used to connect system 1750 with one or more external devices 1772. The external devices 1772 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 1750, which are referred to as input circuitry 1786 and output circuitry 1784. The input circuitry 1786 and output circuitry 1784 include one or more user interfaces designed to enable user interaction with the platform 1750 and/or peripheral component interfaces designed to enable peripheral component interaction with the platform 1750. Input circuitry 1786 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 1784 may be included to show information or otherwise convey information, such as sensor readings, actuator position(s), or other like information. Data and/or graphics may be displayed on one or more user interface components of the output circuitry 1784. Output circuitry 1784 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 1750. The output circuitry 1784 may also include speakers and/or other audio emitting devices, printer(s), and/or the like. Additionally or alternatively, sensor(s) may be used as the input circuitry 1784 (e.g., an image capture device, motion capture device, or the like) and one or more actuators may be used as the output device circuitry 1784 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 1750 may communicate over the IX 1756. The IX 1756 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 1756 may be a proprietary bus, for example, used in a SoC based system.

The number, capability, and/or capacity of the elements of system 1750 may vary, depending on whether computing system 1750 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 1750 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible, non-transitory machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

Some non-limiting examples of various embodiments are presented below.

Example 1 includes an apparatus, comprising: a main current source (MCS) coupled to an output node; a parallel current source (PCS) coupled to the output node; and a finite state machine (FSM) coupled to the PCS, the output node, and the MCS.

Example 2 include the apparatus of Example 1, wherein the FSM is to detect a droop in a voltage at the output node, and in response to the detection of the droop, provide a digital code to the PCS to provide a PCS output current to the output node at a respective elevated level.

Example 3 include the apparatus of Example 2, wherein the FSM is to instruct the PCS via the digital code to maintain the PCS output current at the respective elevated level until the FSM detects a recovery of the voltage at the output node.

Example 4 include the apparatus of Example 2 or 3, wherein the output node is coupled to a processor and the respective elevated level is based on a power consumption of the processor.

Example 5 include the apparatus of any one of Examples 1-4, wherein the FSM is to detect a recovery of a voltage droop at the output node, and in response to the detection of the recovery of the voltage droop, the FSM is to provide a voltage identifier (VID) to the MCS to instruct the MCS to increase a MCS output current to the output node to a respective elevated level.

Example 6 include the apparatus of Example 5, wherein the FSM is to provide a digital code to the PCS to ramp down the PCS output current in response to the detection of the recovery of the voltage droop.

Example 7 include the apparatus of Example 6, wherein the ramp down of the PCS output current is concurrent with the MCS providing the MCS output current at the respective elevated level.

Example 8 include the apparatus of Example 6 or 7, wherein the FSM is to provide the VID to the MCS to instruct the MCS to ramp down the MCS output current from the respective elevated level in response to completion of the ramp down of the PCS output current.

Example 9 include the apparatus of any one of Examples 1-8, wherein: the FSM is coupled to the output node via a high-pass filter; the high-pass filter comprises a comparator, a first digital-to-analog converter (DAC) to provide a fixed undershoot threshold voltage to a non-inverting input of the comparator, a second DAC to provide a programmable comparison voltage to an inverting input of the comparator, and an output which indicates to the FSM whether an undershoot has been detected at the output node.

Example 10 include the apparatus of any one of Examples 1-9, wherein the FSM comprises one or more tunable parameters including at least one of overshoot threshold, set point, voltage identifier boost amount or undershoot threshold.

Example 11 include the apparatus of any one of Examples 1-10, further comprising a voltage regulator in which the MCS, PCS and FSM are provided, wherein the voltage regulator is in at least one of an integrated circuit, a System on Chip, a System in Package or a computing device.

Example 12 includes an apparatus, comprising: a logic circuit; a first flip-flop having a data input coupled to an output of the logic circuit and a data output coupled to an input of the logic circuit; a second flip-flop having a data input coupled to the output of the logic circuit, a data output coupled to an input of the logic circuit, and an input to receive an undershoot signal, wherein the undershoot signal is to indicate a presence of an undershoot in an output voltage of a voltage regulator; and one or more multiplexers having inputs coupled to outputs of the first and second flip-flops, wherein the one or more multiplexers are to provide an output to control a parallel current source (PCS) of the voltage regulator.

Example 13 include the apparatus of Example 12, wherein: the second flip-flop has a preset input to receive an overshoot signal; and the overshoot signal is to indicate a presence of an overshoot in the output voltage of the voltage regulator.

Example 14 include the apparatus of Example 12 or 13, wherein the apparatus comprises a finite state machine (FSM) having a plurality of states including: a droop state in which an undershoot is detected in the output voltage of the voltage regulator and the PCS is to provide an output current to an output node of the voltage regulator; a PCS ramp down state in which the output current of the PCS is to ramp down while a set point of a main current source (MCS) of the voltage regulator is boosted; and a MCS ramp down state in which the set point of the MCS is to ramp down.

Example 15 include the apparatus of Example 14, wherein the FSM is to transition from the droop state to the PCS ramp down state when a recovery of the output voltage of the voltage regulator is detected.

Example 16 includes an apparatus, comprising: a main current source (MCS) coupled to an output node; a parallel current source (PCS) coupled to the output node; a high-pass filter coupled to the output node; and a finite state machine (FSM) coupled to the MCS, the output node, the PCS and the high-pass filter, wherein the FSM is to transition among a plurality of states including: a droop state in which, in response to detection of a voltage droop at the output node, the FSM is to control the PCS is to provide an output current to the output node; a PCS ramp down state in which the FSM is to control the PCS to ramp down the output current and concurrently boost a set point of the MCS; and a MCS ramp down state in which the FSM is to control the MCS is to ramp down the set point.

Example 17 include the apparatus of Example 16, wherein: the plurality of states include an idle state; the FSM is to transition into the droop state from the idle state when the voltage droop is detected; and the FSM is to transition into the droop state from the MCS ramp down state when the voltage droop is detected.

Example 18 include the apparatus of Example 16 or 17, wherein the FSM is to transition into the PCS ramp down state from the droop state when a voltage of the output node has recovered.

Example 19 include the apparatus of any one of Examples 16-18, wherein the FSM is to transition into the MCS ramp down state from the droop state or the PCS ramp down state when an overshoot of the output node is detected.

Example 20 include the apparatus of any one of Examples 16-19, wherein: the plurality of states include an idle state; and the FSM is to transition into the idle state from the droop state or the MCS ramp down state when a ramp down of the set point is completed.

Example 21 includes a method, comprising: at a finite state machine (FSM), detecting a droop in a voltage at an output node, and in response to the detection of the droop, providing a digital code to a parallel current source (PCS) coupled to the output node, to provide a PCS output current to the output node at a respective elevated level, wherein the FSM is coupled to a main current source (MCS) and the PCS, the MCS and the PCS are coupled to the output node, and the FSM is coupled to the MCS, the output node, and the PCS.

Example 22 include the method of Example 21, further comprising: at the FSM, instructing the PCS via the digital code to maintain the PCS output current at the respective elevated level until the FSM detects a recovery of the voltage at the output node.

Example 23 include the method of Example 21 or 22, further comprising: at the FSM, detecting a recovery of a voltage droop at the output node, and in response to the detection of the recovery of the voltage droop, providing a voltage identifier (VID) to the MCS to instruct the MCS to increase a MCS output current to the output node to a respective elevated level.

Example 24 include the method of Example 23, further comprising: at the FSM, providing a digital code to the PCS to ramp down the PCS output current in response to the detection of the recovery of the voltage droop.

Example 25 include the method of Example 24, wherein the ramp down of the PCS output current is concurrent with the MCS providing the MCS output current at the respective elevated level.

Example 26 include the method of Example 24 or 25, further comprising: at the FSM, providing the VID to the MCS to instruct the MCS to ramp down the MCS output current from the respective elevated level in response to completion of the ramp down of the PCS output current.

Example 27 includes a non-transitory machine-readable storage including machine-readable instructions that, when executed, cause a processor or other circuit or computing device to implement the method of any one of Examples 21-26.

Example 28 includes an apparatus comprising means to perform a method in any one of Examples 21-26.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus, comprising:
a main current source (MCS) coupled to an output node;
a parallel current source (PCS) coupled to the output node; and
a finite state machine (FSM) coupled to the MCS, the output node, and the PCS.

2. The apparatus of claim 1, wherein the FSM is to detect a droop in a voltage at the output node, and in response to the detection of the droop, provide a digital code to the PCS to provide a PCS output current to the output node at a respective elevated level.

3. The apparatus of claim 2, wherein the FSM is to instruct the PCS via the digital code to maintain the PCS output current at the respective elevated level until the FSM detects a recovery of the voltage at the output node.

4. The apparatus of claim 2 or 3, wherein the output node is coupled to a processor and the respective elevated level is a function of a power consumption of the processor.

5. The apparatus of any one of claims 1-4, wherein the FSM is to detect a recovery of a voltage droop at the output node, and in response to the detection of the recovery of the voltage droop, the FSM is to provide a voltage identifier (VID) to the MCS to instruct the MCS to increase a MCS output current to the output node to a respective elevated level.

6. The apparatus of claim 5, wherein the FSM is to provide a digital code to the PCS to ramp down the PCS output current in response to the detection of the recovery of the voltage droop.

7. The apparatus of claim 6, wherein the ramp down of the PCS output current is concurrent with the MCS providing the MCS output current at the respective elevated level.

8. The apparatus of claim 6 or 7, wherein the FSM is to provide the VID to the MCS to instruct the MCS to ramp down the MCS output current from the respective elevated level in response to completion of the ramp down of the PCS output current.

9. The apparatus of any one of claims 1-8, wherein:
the FSM is coupled to the output node via a high-pass filter;
the high-pass filter comprises a comparator, a first digital-to-analog converter (DAC) to provide a fixed undershoot threshold voltage to a non-inverting input of the comparator, a second DAC to provide a programmable comparison voltage to an inverting input of the comparator, and an output which indicates to the FSM whether an undershoot has been detected at the output node.

10. The apparatus of any one of claims 1-9, wherein the FSM comprises one or more tunable parameters including at least one of overshoot threshold, set point, voltage identifier boost amount or undershoot threshold.

11. The apparatus of any one of claims 1-10, further comprising a voltage regulator in which the MCS, PCS and FSM are provided, wherein the voltage regulator is in at least one of an integrated circuit, a System on Chip, a System in Package or a computing device.

12. A method, comprising:
at a finite state machine (FSM), detecting a droop in a voltage at an output node, and in response to the detection of the droop, providing a digital code to a parallel current source (PCS) coupled to the output node, to provide a PCS output current to the output node at a respective elevated level, wherein the FSM is coupled to a main current source (MCS) and the PCS, the MCS and the PCS are coupled to the output node, and the FSM is coupled to the MCS, the output node, and the PCS.

13. The method of claim 12, further comprising:
at the FSM, instructing the PCS via the digital code to maintain the PCS output current at the respective elevated level until the FSM detects a recovery of the voltage at the output node.

14. A non-transitory machine-readable storage including machine-readable instructions that, when executed, cause a processor or other circuit or computing device to implement the method of claim 12 or 13.

15. An apparatus comprising means to perform the method of claim 12 or 13.
